# EUROPEAN PATENT SPECIFICATION

(11) **EP 3 504 632 B1**
(45) Date of publication and mention of the grant of the patent: **09.04.2025**
(21) Application number: 17844454.3
(22) Date of filing: 24.08.2017
(51) Int. Cl.: G06F 17/00

(54) **SYSTEM AND METHOD FOR PROVIDING A LEARNING ENVIRONMENT**
SYSTEM UND VERFAHREN ZUR BEREITSTELLUNG EINER LERNUMGEBUNG
SYSTÈME ET PROCÉDÉ DE CRÉATION D'UN ENVIRONNEMENT D'APPRENTISSAGE

(30) Priority: 24.08.2016 US 201662379181 P; 11.05.2017 US 201762505068 P
(43) Date of publication of application: 03.07.2019
(73) Proprietor: SAFE & RELIABLE HEALTHCARE, LLC, Evergreen, CO 80439 (US)
(72) Inventor: FRANKEL, Allan S., Concord, MA 01742 (US); LEONARD, Michael W., Evergreen, CO 80439 (US); CHRISTENSEN FRANKEL, Terri, Concord, MA 01742 (US); MALHINHA, Cynthia Schutt, Evergreen, CT 80439 (US); PROULX, Joshua, Lehi, UT 84043 (US); CRAMER, Daniel, Joseph, Murray, UT 84123 (US); DUCE, John, Lehi, UT 84043 (US)
(74) Representative: Hofstetter, Schurack & Partner
(86) International application number: PCT/US2017/048505
(87) International publication number: WO 2018/039504

(56) References cited:
- WO-A1-2016/119005
- US-A1- 2006 053 380
- US-A1- 2009 309 956
- US-A1- 2013 124 401
- US-A1- 2015 100 892
- US-A1- 2015 100 892

## Description

### Cross-Reference to Related Applications

The present application claims the benefit under 35 U.S.C. § 119(e) of the following two U.S. provisional patent applications: U.S. Provisional Patent Application Serial No. 62/379,181, filed August 24, 2016 for a LEARNING ENVIRONMENT SYSTEM AND METHOD; and U.S. Provisional Patent Application Serial No. 62/505,068, filed May 11, 2017 for a LEARNING ENVIRONMENT SYSTEM AND METHOD.

US 2015/0100892 A1 describes a method for providing a user interface for user specified context, which provides a collection of user interface cards based on a user's context and receiving a user's selection of a plurality of user interface cards from the collection of user interface cards.

US 2006/0053380 A1 describes a client-server infrastructure capable of supporting a variety of asynchronous and synchronous collaboration activities in a so-called collaboration place, which include chatting, viewing and/or editing one or more data files, and/or displays.

WO 2016/119005 A1 describes an online collaboration system comprising at least one server in communication with multiple client computing devices over a communication network, in which the at least one server executes a program to facilitate an online meeting between the users of the client computing devices in the online collaboration environment.

US 2009/0309956 A1 describes techniques to manage a whiteboard for multimedia conference events, which allow multiple participants to communicate and share different types of media contents in a collaborative and real-time meeting over a network.

### Introduction

The application relates to systems that allow for communications between group members and, more particularly, to electronic systems that allow for those communications, especially within work environments, such as hospitals.

### Summary

The present invention is defined by the independent claims. Advantageous embodiments are described in the dependent claims, the following description and the drawings.

The present invention may be thought of as a digital learning board with a display that is sub-divided into multiple display fields. The digital learning board is also configured to receive input from other electronic devices so that multiple users can collaborate using their devices to access, add to, and edit information from the digital learning board.

Additional features and advantages of the present invention are described in, and will be apparent from, the detailed description of the presently preferred embodiments and from the drawings.

### Brief Description of the Drawings

Many aspects of the present disclosure can be better understood with reference to the following drawings. The components in the drawings are not necessarily to scale, with emphasis instead being placed upon clearly illustrating the principles of the disclosure. Reference numerals designate corresponding parts throughout the several views.
FIG. 1 illustrates a system for healthcare environment communication, in accordance with an aspect of the invention.
FIG. 2 illustrates a processor and various modules of the system in FIG. 1.
FIGS. 3A-3E illustrate various user interfaces of a display in the system illustrated in FIG. 1.
FIG. 4 illustrates a user device of the system in FIG. 1.
FIG. 5 illustrates a method for providing a healthcare environment communication, in accordance with another aspect of the invention.
FIG. 6 illustrates a method for providing a healthcare environment communication, in accordance with another aspect of the invention.
FIG. 7 illustrates an exemplary computer environment, in accordance with an aspect of the invention.

### Detailed Description

The disclosure set forth above may encompass multiple distinct inventions with independent utility. Although each of these inventions has been disclosed in its preferred form(s), the specific embodiments thereof as disclosed and illustrated herein are not to be considered in a limiting sense, because numerous variations are possible. The subject matter of the inventions includes all novel and nonobvious combinations and subcombinations of the various elements, features, functions, and/or properties disclosed herein. The following claims particularly point out certain combinations and subcombinations regarded as novel and nonobvious. Inventions embodied in other combinations and subcombinations of features, functions, elements, and/or properties may be claimed in applications claiming priority from this or a related application. Such claims, whether directed to a different invention or to the same invention, and whether broader, narrower, equal, or different in scope to the original claims, also are regarded as included within the subject matter of the inventions of the present disclosure.

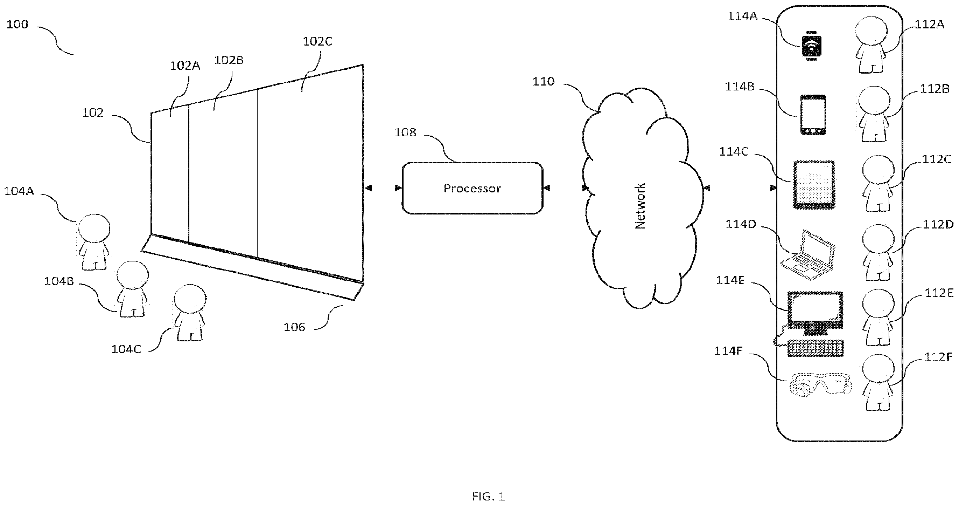

Now referring to FIG. 1 that illustrates a system 100 for the working of the invention, in accordance with an aspect of the invention. The system 100 includes a display module 102, a local input module 106, a processor 108 and a plural input modules 114A-114F (collectively referred to as input modules 114) coupled to each other via a network 110.

The display module 102 may further include multiple display areas 102A, 102B, or 102C. Different display areas may be configured to display different information. For e.g. 102A may display "New identified Issues" whereas 102B may display "Resolved Issues" and 102C may display "Pending Issues". It may be appreciated by a person having ordinary skill in the art that the display 102 may be divided into further display areas or more than three display areas. The display 102 may be a Light emitting diode display(LED), a liquid crystal display (LCD), a plasma display, an Organic Light Emitting display(OLED), an Active Matrix Organic Light Emitting Display (AMOLED), or a cathode ray tube (CRT) display. The display module 102 may be made up of a single display board or multiple display boards may be combined together to make one single display.

The local input module 106 may be a keyboard, a stylus, a mouse or a touch screen interface, etc. the local input module may help the local users 104A-104C, those present within the vicinity of the display module 102, to enter or input information and access the information on display to just read the information.

The processor 108 may comprise at least one data processor for executing program components for executing user- or system-generated requests. The processor 108 may include a microprocessor, embedded or secure processors.

The network 108 may be a wired or a wireless network. The network 108 may be Local Area Network (LAN) that may be implemented using a TCP/IP network and may implement voice or multimedia over Internet Protocol (IP) using a Session Initiation Protocol (SIP). The processor 108 may be coupled to the display module 102 and the plural input modules 114 through a network interface module (not shown in figure). The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/ac/x, etc. The communication network 110 may include, without limitation, a direct interconnection, local area network (LAN), wide area network (WAN), wireless network (e.g., using Wireless Application Protocol), the Internet, etc. Using the network interface and the communication network 110, the processor 108 may communicate with the input modules 114. These input modules 114 may include, without limitation, personal computer(s), smart watches, tablet computer, desktop PCs, head mounted wearables, and various mobile devices such as cellular telephones, smartphones (e.g., Apple iPhone, Android-based phones, etc.) or the like. Each of the input modules 114 corresponds to at least one of plural remote users 112A-112F (collectively referred to as remote user 112).

In some embodiments, the processor 108 may be disposed in communication with one or more memory devices (not shown in figure) via a storage interface (also not shown in figure). The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

The processor 108, receives inputs from the connected input modules 114. As described above, each of the input module corresponds to each of the users 112. Users may have various defined accessibility roles. Some users may have read access, some may have write access, and some may have both read and write access. The users 112 logon using their respective input modules 114. The users may add information through their respective input modules 114. This information, when received by the processor 108 through the network 110, analyzes the information and processes it to be displayed on the display module 102 on any of the display areas 102A, 102B, and 102C. The local users 104A, 104B, and 104C (collectively referred to as remote users 104) are those users who may be present at the vicinity of the display module 102. They may cumulatively logon to the system 100 using remote input module 106. Any information added by any type of user, be it local users 104 or remote users 112, is analyzed and processed by the processor 108 to be displayed on designated display areas 102A, 102B, and 102C.

The processor decides display areas based on the context of the information received or input received from the users 112, and 104. Also, the processor 108 enables usage of various collaborative tools like conference calls including audio and video conference calls, document sharing, document editing, document collaborating, etc. By way of an example the local users 104 who may be present near the display module 102 are able to collaborate or have a team huddle with the remote users 112. The remote users 112 thus may attend or collaborate in every team meeting or documents. Also, the remote users 112 and the local users 104 may be part of same team and may work together, even when not being present physically together, to identify key issues, problems, news, techniques etc.

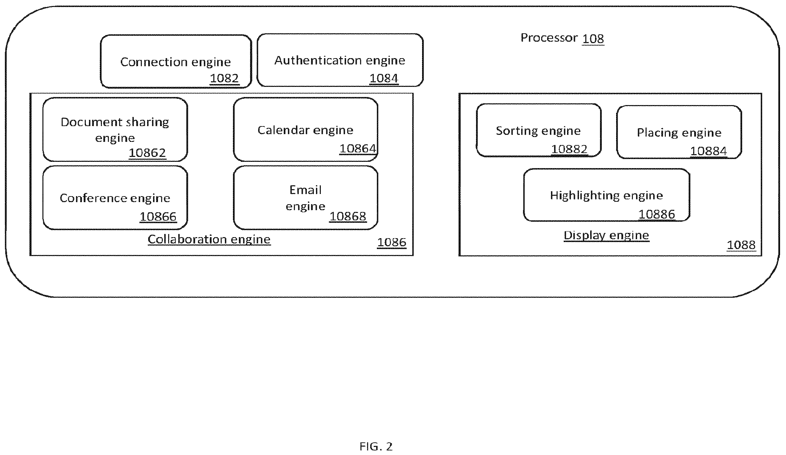

Now referring to FIG. 2 illustrating various modules of the processor 108, in accordance with an aspect of the invention. The processor 108 helps in collaboration of remote users 112 and local users 104 in the learning system 100. The processor 108 includes a connection engine 1082, an authentication engine 1084, a collaboration engine 1086, and a display engine 1088.

The connection engine 1082, acts as a network interface and helps in connecting to the network 110. The connection engine may be either a microprocessor or a combination of multiple processors. Microprocessors may be either hardware or software compilations.

The authentication engine 1084, connected to the connection engine 1082, helps in identification and authentication of user logging in. The authentication engine 1082 helps to keep a check on user access of the system 100. The authentication engine 1082 may be coupled to a memory or a database to store the authentication details and verify the same. Also, the database may include information like which user may be provided what kind of access. The access level may be based on user hierarchy, seniority, user type etc. The access may be read access, write access or a combination of both.

The collaboration engine 1086 helps users 112 and 104 to collaborate with each other. The collaboration engine 1086 may include a document sharing engine 10862, a calendar engine 10864, a conference engine 10866 and an email engine 10868.

The document sharing engine 10862 helps users to share and collaborate on various documents. The documents may be text files, images, videos, presentations spreadsheets, etc. the document sharing engine 10862 helps in identifying user who edits or accesses the document supported by time stamp of when the document was used. In this manner, the document sharing engine 10862 is configured to trace back to a user who makes changes or uses it and when.

Also, in case a user wrongly accesses a document, the document sharing engine may stop the user by providing a warning to the user on his respective device. For this functionality, the document sharing engine 10862 may be connected to the memory to access the document sharing permissions etc. In an implementation, the documents sharing engine may have its own cache memory for the same functioning. Sharing of documents may be done by providing access through either user IDs of the users or email addresses. Further, the documents sharing engine 10862 may have another setting of sharing a particular document with all users that is keep the document public. Documents shared may also include report of errors, or single error reported.

The calendar engine 10864, provides meeting possibilities to users 112 and 104. The calendar engine collaborates calendars of all users 112 and 104 and may initiate meeting sessions based on events found. The events may be calendar invites or calendar events received for a specific time and date. User who wants to have a meeting may send in calendar invites to other user desired on the meeting. When these users accept the invites, the events are added on the respective user's device calendar. When meeting time approaches, user is intimated about the same. In other implementation, the meeting may automatically start on specific time or in some buffer time.

The conference engine 10866 helps users 112 and 104 to have conference calls. The conference calls may be either audio calls, video calls or a combination thereof. Conference calls may be made by inviting participants using their email IDs or user IDs.
The email engine 10868 may also help users 112 and 104 to have meetings initiated. It works similar to the calendar engine 10864. The email engine 10868 may be able to automatically pick up meeting request from mails received by a user. this may be done using a semantic analysis. Also, when a user sends a meeting invite, the email engine may automatically create a meeting event. Also, the email agent 10868 may be able to send reminders to invited users before the meeting event happens.

The display engine 1088 is responsible for displaying the right content at the right place at the right time. The display engine is coupled with the authentication engine 1084. The display engine receives data from users 112 and 104 after being authenticated and displays the same at right place on the display module 102. The display engine 1088 may include a sorting engine 10882, a placing engine 10884 and a highlighting engine 10886.

The sorting engine 10882 helps in sorting data received as per the content written. For example, the data from a user about an error is sorted out to be an error information. Hence, it may be tagged as an error information and sorted out to be placed on specific area "Issues identified" 102A. This may be done using a semantic analysis by the sorting engine 10882.

The placing engine 10884 decides positioning of the information received, as per the tag of the information sorted by the sorting engine 10882. The placing engine 10882 then may also display name of user adding information and time of the information received. For placing of the information, the placing engine 10884, may maintain a repository of tags and their placing on the display module 102, based on which placing of the text is performed.

The highlighting engine 10886 may be used by a user to highlight a certain severe pending issue or a rectified issue. Various types of highlighting colors may be used to convey different information. The highlighting engine 10886 may have this functionality specially to help users having read access only. In this manner, users with only read access may be able to convey information without editing the same.

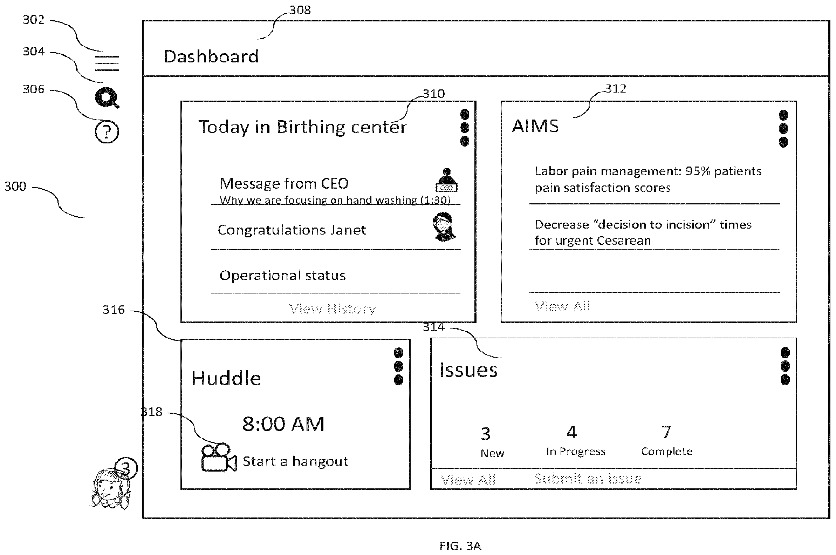

Now referring to FIG. 3A-3E, various user interfaces at various steps and levels of information are illustrated, in accordance with an aspect of the invention. FIG. 3A depicts a user interface 300 after the user logs on to the system 100. The user interface 300 is similar to the display module 102 and will be referred interchangeably. The user interface 300 may depict a first landing page after the user logs in. The user interface 300 may include a menu input 302. The menu input 302 may be used by a user to access various functions of the user interface 300. The user interface 300 may also include a search input tab 304. The search tab 304 may be utilized to search for various information like issues pending etc. Furthermore, the user interface may utilize a help tab 306. The help tab 306 may be utilized to help a user or provide to the user various information about the user interface 300.

Furthermore, the user interface 300 may include a dashboard 308 that may be further divided into multiple information areas to display multiple types of information. The user interface 300 may include a general information area 310, an aims area 312, and issues area 314. The general information area 310 provides general important information like "A message from the CEO", or "operational status of a new wing" etc. This information may generally be information to public at large and not for some specific users. The aims area 312 helps providing information to users about specific aims that their organization is working towards. It may involve information about decreasing a particular type of a problem faced by users, and may get updated regularly or in real-time. The issues area 314 may contain information about new issues identified, in progress resolution of issues and also completely rectified issues.

The user interface 300, may also include an information input area 316 wherein a user may enter information of interest or use. For e.g., a user may input information about issues being faced in a process etc. which, after sorting by the sorting engine 10882, may display it in the issues section 314. The user interface may also include a tab to collaborate for e.g. 318 as a Google hangout tab. User can simply click on the tab 318 to initiate a meeting with the users invited or a general meeting with all users.

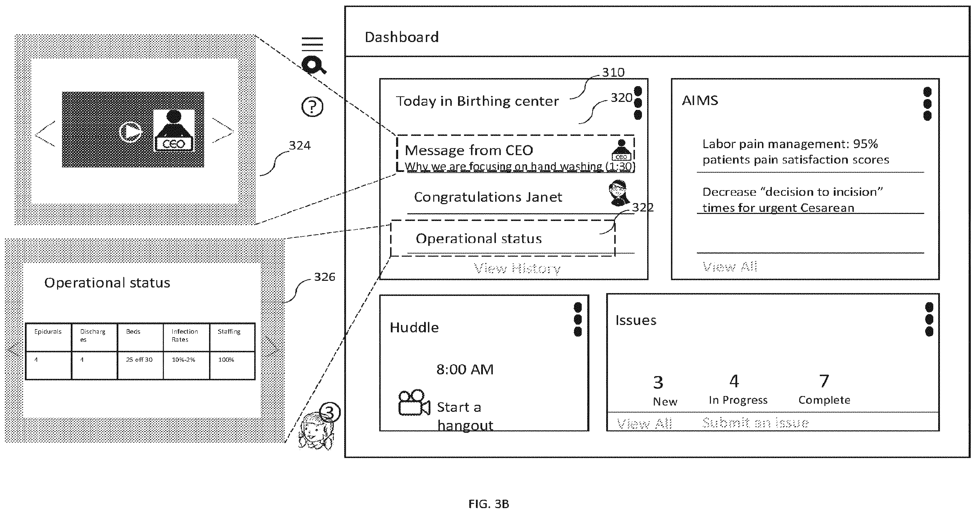

Now referring to FIG. 3B, there is shown second level information that is available to users accessing the general information area 310. A user may be able to access more information when he touches the messages on the general information area 310. For e.g., a user may touch a message 320 i.e. "A message from the CEO", or message 322 i.e. "Operational status" to see more information about the same. The messages may open a pop-up window or a completely different window 324 and 326 respectively, to display additional information.

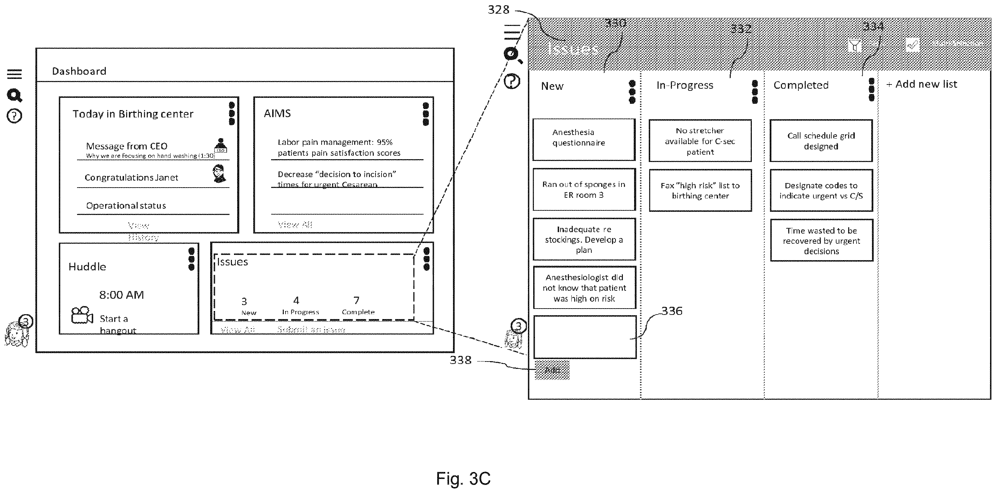

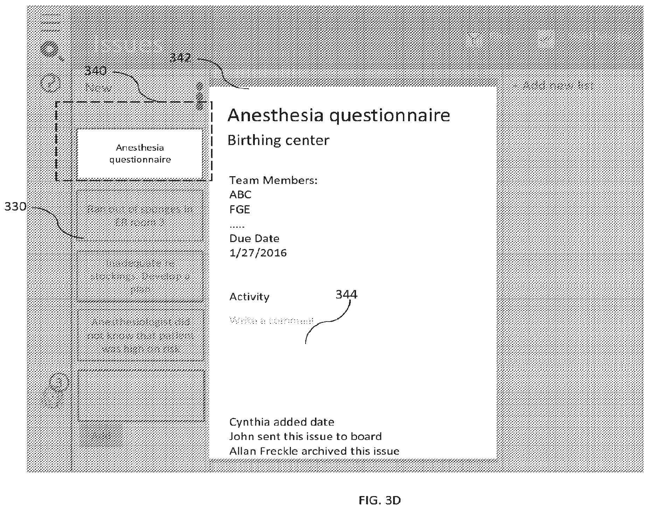

Similarly, as depicted in FIG. 3C, the user may touch the issues identified at 314. This input from the user may provide a new sub-user interface 328. The sub-user interface 328 may have further bifurcation of display area into multiple parts displaying New issues identified 330, In progress issues 332, and Completed issues 334 areas. User may add a new issue or in progress issue or completed issue information through an information addition area 336 and hitting a submit button 338. Further, the user may get into third level of information wherein, user going through the new issues identified area 330 may want to have more information about a message 340 as depicted in FIG. 3D. the user may give his/her input by touching the message 340 that may open a pop-up window 342 that may include an activity enter area 344 to add some notes about the message that may act as supporting information.

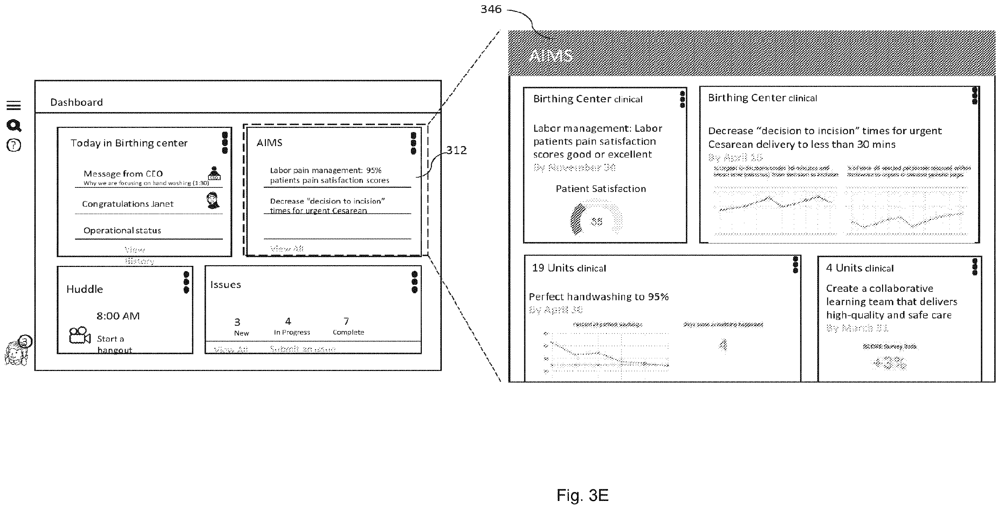

Referring to FIG. 3E, the user wanting to know about information in Aims area 312, may provide their input by touching the area. This action may open up a new window 346 with a description of Aims area 312.

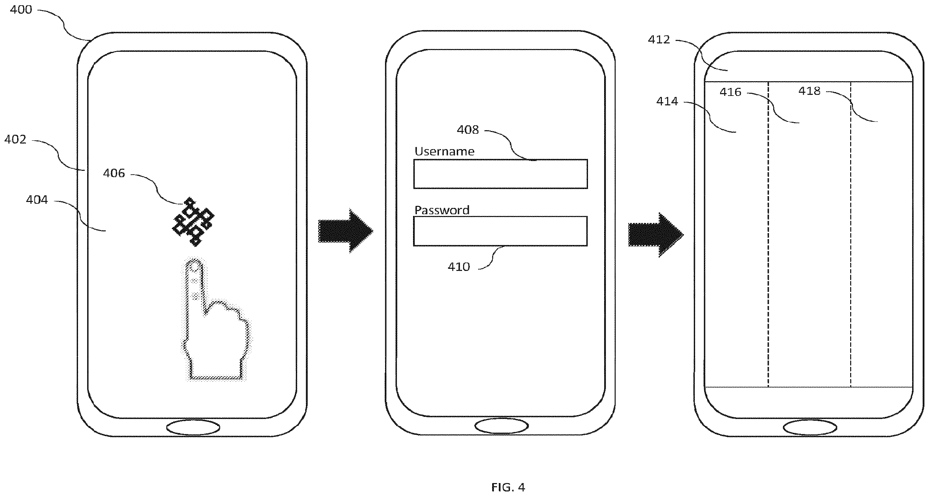

Referring to FIG. 4, a user interface 412, is provided on a user device 400 having a display frame 402 and a display unit 404. The user interface 412 may be accessed using a software application 406 provided on the user device 400. The software application may be initiated by user's touch input. After this input, the software application may display an authentication interface or login interface having a username field 408 and a password field 410. User may also be able to login using his other authentication details like fingerprint, or biometric scan or voice prints etc. After successful log in, user is displayed with the user interface 412 that may include multiple information display areas 414, 416 and 418.

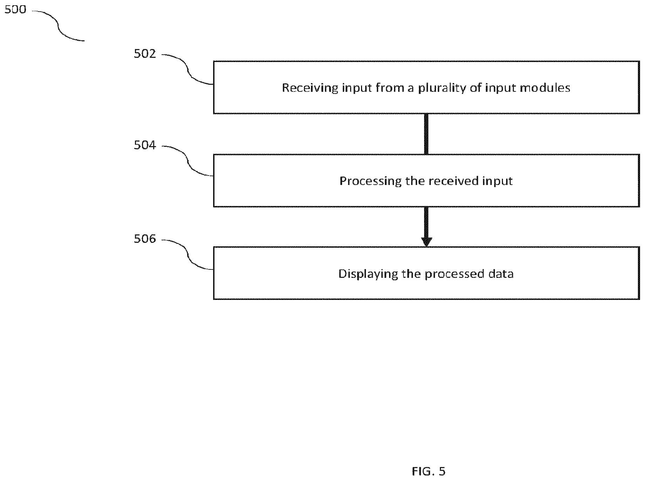

FIG. 5 illustrates a method 500 for learning in accordance with another aspect of the invention. At step 502, the processor 108, receives inputs from the input modules 114 corresponding to the plural users 112. As described, the input modules 114 may have the software application 406 which when activated by a user may authenticate the user by requesting the user of his username and password. The user may then input information which when received by the processor 108 is processed. The processing includes semantic analysis, and further analysis as to which part of the display module 102 should the information be displayed on is performed. Further, at step 506, the processed data is then displayed in the relevant part of the display module 102.

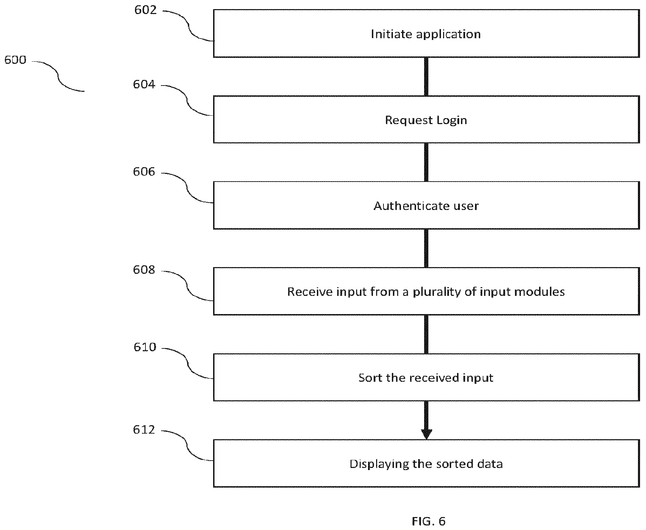

FIG. 6 illustrates a method 600 in accordance with another aspect of the invention. At step 602, user may initiate the application for connecting his input module to the display module 102. The application may be a software application embedded into the Operating Software or may be downloaded and installed via an application store. The application when initiated, at step 604, provides an authentication interface to the user. The user may enter his log in credentials to log in. Log in may be through a username password, or other log in credentials like fingerprint, biometric scans etc. At step 606, the processor 108 checks the log in credentials and verifies it from the memory or database. After successful login, at step 608, the processor receives input from the user and identifies the information being input. Further, at step 610, the processor sorts the data based on the context of the information added. The context may be extracted using semantic analysis. Further, at step 612, as per the sorted data, specific area of the display module 102 is identified wherein the data is to be displayed.

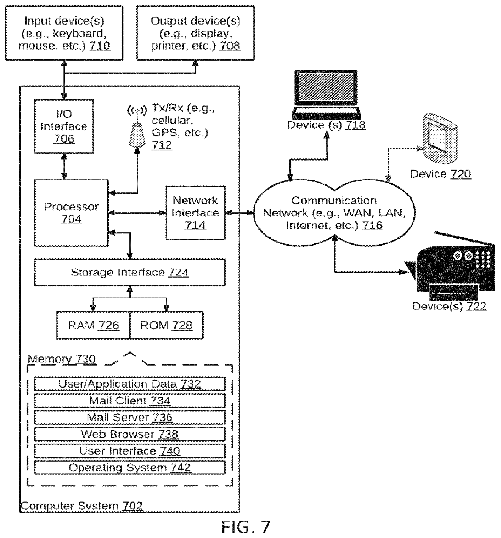

FIG. 7 illustrates an exemplary computer system 702 for implementing various embodiments of the invention. Computer system 702 may comprise a central processing unit ("CPU" or "processor") 704. Processor 704 may comprise at least one data processor for executing program components for executing user- or system-generated requests. A user may include a person, a person using a device such as such as those included in this disclosure, or such a device itself. Processor 704 may include specialized processing units such as integrated system (bus) controllers, memory management control units, floating point units, graphics processing units, digital signal processing units, etc. Processor 704 may include a microprocessor, such as AMD Athlon or Sempron, Duron or Opteron, ARM's application, embedded or secure processors, IBM PowerPC, Intel's Core, Itanium, Xeon, Celeron or other line of processors, etc. Processor 704 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 704 may be disposed in communication with one or more input/output (I/O) devices via an I/O interface 706. I/O interface 706 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.11 a/b/g/n/ac/x, Bluetooth, cellular (e.g., code-division multiple access (CDMA), highspeed packet access (HSPA+), global system for mobile communications (GSM), long-term evolution (LTE), WiMax, or the like), etc.

Using I/O interface 706, computer system 702 may communicate with one or more I/O devices. For example, an input device 708 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. An output device 710 may be a printer, fax machine, video display (e.g., cathode ray tube (CRT), liquid crystal display (LCD), light-emitting diode (LED), plasma, or the like), audio speaker, etc. In some embodiments, a transceiver 712 may be coupled to processor 704. Transceiver 712 may facilitate various types of wireless transmission or reception. For example, transceiver 712 may include an antenna operatively connected to a transceiver chip (e.g., Texas Instruments WiLink WL1283, Broadcom BCM4760IUB8, Infineon Technologies X-Gold 618-PMB9800, or the like), providing IEEE 802.11a/b/g/n/ac/x, Bluetooth, FM, global positioning system (GPS), 2G/3G HSDPA/HSUPA communications, etc.

In some embodiments, processor 704 may be disposed in communication with a communication network 714 via a network interface 716. Network interface 716 may communicate with communication network 714. Network interface 716 may employ connection protocols including, without limitation, direct connect, Ethernet (e.g., twisted pair 10/100/1000 Base T), transmission control protocol/internet protocol (TCP/IP), token ring, IEEE 802.11a/b/g/n/ac/x, etc. Communication network 714 may include, without limitation, a direct interconnection, local area network (LAN), wide area network (WAN), wireless network (e.g., using Wireless Application Protocol), the Internet, etc. Using network interface 716 and communication network 714, computer system 702 may communicate with devices 718, 720, and 722. These devices may include, without limitation, personal computer(s), server(s), fax machines, printers, scanners, various mobile devices such as cellular telephones, smartphones (e.g., Apple iPhone, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 602 may itself embody one or more of these devices.

In some embodiments, processor 704 may be disposed in communication with one or more memory devices (e.g., a RAM 726, a ROM 728, etc.) via a storage interface 724. Storage interface 724 may connect to memory devices 730 including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

Memory devices 730 may store a collection of program or database components, including, without limitation, an operating system 732, a user interface application 734, a web browser 736, a mail server 738, a mail client 740, a user/application data 742 (e.g., any data variables or data records discussed in this disclosure), etc. Operating system 732 may facilitate resource management and operation of computer system 702. Examples of operating system 732 include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8/10, etc.), Apple iOS, Google Android, or the like.

User interface 734 may facilitate display, execution, interaction, manipulation, or operation of program components through textual or graphical facilities. For example, user interfaces may provide computer interaction interface elements on a display system operatively connected to computer system 702, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, computer system 702 may implement web browser 736 stored program component. Web browser 736 may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, computer system 702 may implement mail server 738 stored program component. Mail server 738 may be an Internet mail server such as Microsoft Exchange, or the like. Mail server 738 may utilize facilities such as ASP, ActiveX, ANSI C++/C#, Microsoft .NET, CGI scripts, Java, JavaScript, PERL, PHP, Python, WebObjects, etc. Mail server 738 may utilize communication protocols such as internet message access protocol (IMAP), messaging application programming interface (MAPI), Microsoft Exchange, post office protocol (POP), simple mail transfer protocol (SMTP), or the like. In some embodiments, computer system 702 may implement mail client 740 stored program component. Mail client 740 may be a mail viewing application, such as Apple Mail, Microsoft Entourage, Microsoft Outlook, Mozilla Thunderbird, etc.

The above description has described embodiments of the invention with different functional units and processors. However, any suitable distribution of functionality between different functional units, processors or domains may be used without detracting from the invention. For example, functionality illustrated to be performed by separate processors or controllers may be performed by the same processor or controller. References to specific functional units are only intended as examples of suitable means or mechanisms for providing the described functionality, rather than being indicative of a strict logical or physical structure or organization.

Various embodiments of the invention provide systems and methods for enabling effective communications among several groups within an organization. One exemplary organization is a hospital, and using the system and method of the invention in that setting enables effective communication among various groups of healthcare service providers and administrators. The above described method enables generation of a personalized and contextual summary of a multimedia communication session that may also be thought of as a conference session or a webinar. The summary is generated based on individual needs, topics, roles, or participants by dynamically generating relevant meta-data along with content time stamp by using a semantic analyzer and a voice analyzer.

The specification has also described systems and methods for building contextual highlights for conferencing or communication systems. The illustrated steps are set out to explain the exemplary embodiments shown, and it should be anticipated that ongoing technological development may change how particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with the scope of invention being indicated by the following claims.

## Claims

1. A healthcare environment communication system for communication between plural remote users of the healthcare environment , comprising;
a memory;
a network;
a display device configured to display information in a plurality of designated information areas;
user interface devices connected to the network, each including an input interface configured to obtain user inputs from individuals, including issues information about rendering services to patients in a healthcare facility; and
a processor, connected to the user interface devices via the network and to the display device, configured to process the user inputs in real-time and enable the users to collaborate, by the processor being configured to
maintain in the memory a repository comprising a plurality of tags, each of the plurality of tags corresponding to a respective one of a plurality of designated information areas;
receive the user inputs,
identify issues information by adding tags to the user inputs, including semantically analyzing the issues information input by each of the users to identify one of the plurality of designated information areas to which the issues information relates, and adding one of the plurality of tags to the issues information input by each of the users based on the tag that corresponds to the identified one of the plurality of designated information areas to which the issues information relates,
compile and organize the user inputs, including sort the user inputs by the tag added to the issues information input by each of the users, and
output the issues information input by each of the users to the display device in different ones of the plurality of designated information areas depending upon the tag added to the issues information input by each of the users.

2. The communication system of claim 1, wherein the designated information areas of the display device include at least one of the plurality of designated information areas listing the issues information input by each of the users in providing healthcare identified by the tag that corresponds to the one of the plurality of designated information areas to which the issues information relates.

3. The communication system of claim 2, wherein the designated information areas of the group display include a newly identified issues area, a pending issues area, and a resolved issues area, each simultaneously displaying a list of corresponding issues information.

4. The communication system of claim 1, wherein at least some of the inputs are from portable devices carried by the healthcare individuals within the healthcare facility.

5. The communication system of claim 4, wherein at least one of the designated information areas of the display device contains aggregated information obtained from the user inputs of more than one of the healthcare individuals.

6. A method for healthcare-environment communication between remote users via real-time communication, comprising:
maintaining a repository comprising a plurality of tags, each of the plurality of tags corresponding to a respective one of a plurality of designated information areas;
receiving, by a processor, user inputs from portable devices carried by healthcare providers, among the remote users, rendering various services to patients in a healthcare facility;
processing, by the processor, from the user inputs, issues information about providing healthcare by adding tags to the user inputs, including semantically analyzing the issues information input by each of the users to identify one of the plurality of designated information areas to which the issues information relates, and adding one of the plurality of tags to the issues information input by each of the users based on the tag that corresponds to the identified one of the plurality of designated information areas to which the issues information relates
compiling the user inputs;
organizing the user inputs into designated information areas of compiled data by sorting the user inputs based on the tags added to the issues information input by each of the users; and
displaying, by the processor, the compiled data, including the issues information input by each of the users, on a display device divided into the designated information areas depending upon the tag added to the issues information input by each of the users.

7. A non-transitory computer-readable storage medium storing instructions that, when executed by a computing device, causes the computing device to perform a method comprising:
maintaining in a memory a repository comprising a plurality of tags, each of the plurality of tags corresponding to a respective one of a plurality of designated information areas;
receiving user inputs from portable devices carried by healthcare providers rendering various services to patients in a healthcare facility;
identifying from the user inputs issues information about providing healthcare by adding tags to the user inputs, , including semantically analyzing the issues information input by each of the users to identify one of the plurality of designated information areas to which the issues information relates, and adding one of the plurality of tags to the issues information input by each of the users based on the tag that corresponds to the identified one of the plurality of designated information areas to which the issues information relates,
compile the user inputs;
organize the user inputs into designated information areas of compiled data by sorting the user inputs based on the tags added to the issues information input by each of the users; and
displaying the compiled data, including the issues information input by each of the users, on a display device divided into the designated information areas depending upon the tag added to the issues information input by each of the users.

8. The non-transitory computer-readable storage medium of claim 7, wherein the designated information areas include at least one designated information area listing the issues in providing healthcare identified by the tags and organized by status of the issues information.

9. The method of claim 6, wherein the designated information areas into which the display device is divided include at least one designated information area to display the aims of the healthcare facility, and another designated information area to display issues in providing healthcare identified by the user inputs are organized by at least one of time and status.

10. The method of claim 9, wherein the aims of the healthcare facility include at least one of managing patient pain, decreasing decision times in administering health care, improving procedures critical to patient health and forming at least one team of the healthcare providers to improve health care.

## Patentansprüche

1. Gesundheitswesenkommunikationssystem zur Kommunikation zwischen mehreren Remote-Benutzern des Gesundheitswesens, umfassend:
einen Speicher;
ein Netzwerk;
eine Anzeigevorrichtung, die dazu konfiguriert ist, Informationen in einer Vielzahl von bezeichneten Informationsbereichen anzuzeigen;
Benutzerschnittstellenvorrichtungen, die mit dem Netzwerk verbunden sind, wobei jede eine Eingabeschnittstelle beinhaltet, die dazu konfiguriert ist, Benutzereingaben von Personen zu erhalten, beinhaltend Probleminformationen zum Leisten von Diensten für Patienten in einer Gesundheitseinrichtung;
einen Prozessor, der mittels des Netzwerks mit den Benutzerschnittstellenvorrichtungen und mit der Anzeigevorrichtung verbunden ist und dazu konfiguriert ist, die Benutzereingaben in Echtzeit zu verarbeiten und den Benutzern ein Zusammenarbeiten zu ermöglichen, indem der Prozessor konfiguriert ist zum:
Pflegen eines Repositorys, umfassend eine Vielzahl von Tags, in dem Speicher, wobei jeder von der Vielzahl von Tags einem jeweiligen von einer Vielzahl von bezeichneten Informationsbereichen entspricht;
Empfangen der Benutzereingaben;
Identifizieren von Probleminformationen durch Hinzufügen von Tags zu den Benutzereingaben, beinhaltend ein semantisches Analysieren der Probleminformationen, die von jedem der Benutzer eingegeben werden, um einen von der Vielzahl von bezeichneten Informationsbereichen, auf den sich die Probleminformationen beziehen, zu identifizieren, und ein Hinzufügen eines von der Vielzahl von Tags zu den Probleminformationen, die von jedem der Benutzer eingegeben werden, auf der Basis des Tags, der dem identifizierten von der Vielzahl von bezeichneten Informationsbereichen, auf den sich die Probleminformationen beziehen, entspricht,
Kompilieren und Organisieren der Benutzereingaben, beinhaltend ein Sortieren der Benutzereingaben anhand des Tags, der den Probleminformationen, die von jedem der Benutzer eingegeben werden, hinzugefügt wurde, und
Ausgeben der Probleminformationen, die von jedem der Benutzer eingegeben werden, an die Anzeigevorrichtung in unterschiedlichen von der Vielzahl von bezeichneten Informationsbereichen in Abhängigkeit von dem Tag, der den Probleminformationen, die von jedem der Benutzer eingegeben werden, hinzugefügt wurde.

2. Kommunikationssystem nach Anspruch 1, wobei die bezeichneten Informationsbereiche der Anzeigevorrichtung mindestens einen von der Vielzahl von bezeichneten Informationsbereichen beinhalten, der die Probleminformationen, die von jedem der Benutzer eingegeben werden, beim Bereitstellen von Gesundheitspflege, die von dem Tag identifiziert werden, der dem identifizierten von der Vielzahl von bezeichneten Informationsbereichen, auf den sich die Probleminformationen beziehen, entspricht, auflistet.

3. Kommunikationssystem nach Anspruch 2, wobei die bezeichneten Informationsbereiche der Gruppenanzeige einen neu identifizierten Problembereich, einen noch nicht erledigten Problembereich und einen gelösten Problembereich beinhalten, die jeweils gleichzeitig eine Liste von entsprechenden Probleminformationen anzeigen.

4. Kommunikationssystem nach Anspruch 1, wobei mindestens einige der Eingaben von tragbaren Vorrichtungen stammen, die von den Personen der Gesundheitspflege innerhalb der Gesundheitseinrichtung getragen werden.

5. Kommunikationssystem nach Anspruch 4, wobei mindestens einer der bezeichneten Informationsbereiche der Anzeigevorrichtung aggregierte Informationen enthält, die aus den Benutzereingaben von mehr als einem von den Personen der Gesundheitspflege erhalten werden.

6. Verfahren zur Gesundheitswesenkommunikation zwischen Remote-Benutzern mittels Echtzeit-Kommunikation, umfassend:
Pflegen eines Repositorys, umfassend eine Vielzahl von Tags, wobei jeder von der Vielzahl von Tags einem jeweiligen von einer Vielzahl von bezeichneten Informationsbereichen entspricht;
Empfangen von Benutzereingaben von tragbaren Vorrichtungen, die von Gesundheitsdienstleistern von den Remote-Benutzern getragen werden, die verschiedene Dienste für Patienten in einer Gesundheitseinrichtung leisten, durch einen Prozessor;
Verarbeiten von Probleminformationen zum Bereitstellen von Gesundheitspflege aus den Benutzereingaben durch den Prozessor durch Hinzufügen von Tags zu den Benutzereingaben, beinhaltend ein semantisches Analysieren der Probleminformationen, die von jedem der Benutzer eingegeben werden, um einen von der Vielzahl von bezeichneten Informationsbereichen, auf den sich die Probleminformationen beziehen, zu identifizieren, und ein Hinzufügen eines von der Vielzahl von Tags zu den Probleminformationen, die von jedem der Benutzer eingegeben werden, auf der Basis des Tags, der dem identifizierten von der Vielzahl von bezeichneten Informationsbereichen, auf den sich die Probleminformationen beziehen, entspricht;
Kompilieren der Benutzereingaben;
Organisieren der Benutzereingaben zu bezeichneten Informationsbereichen von kompilierten Daten durch Sortieren der Benutzereingaben auf der Basis der Tags, die zu den Benutzereingaben, die von jedem der Benutzer eingegeben werden, hinzugefügt wurden; und
Anzeigen der kompilierten Daten, beinhaltend der Probleminformationen, die von jedem der Benutzer eingegeben werden, durch den Prozessor auf einer Anzeigevorrichtung, die in die bezeichneten Informationsbereiche in Abhängigkeit von dem Tag, der zu den Probleminformationen, die von jedem der Benutzer eingegeben werden, hinzugefügt wurde, unterteilt ist.

7. Nichtflüchtiges computerlesbares Speichermedium, das Anweisungen speichert, die bei Ausführung durch eine Rechenvorrichtung bewirken, dass die Rechenvorrichtung ein Verfahren durchführt, umfassend:
Pflegen eines Repositorys, umfassend eine Vielzahl von Tags, in einem Speicher, wobei jeder von der Vielzahl von Tags einem jeweiligen von einer Vielzahl von bezeichneten Informationsbereichen entspricht;
Empfangen von Benutzereingaben von tragbaren Vorrichtungen, die von Gesundheitsdienstleistern getragen werden, die verschiedene Dienste für Patienten in einer Gesundheitseinrichtung leisten;
Identifizieren von Probleminformationen zum Bereitstellen von Gesundheitspflege aus den Benutzereingaben durch den Prozessor durch Hinzufügen von Tags zu den Benutzereingaben, beinhaltend ein semantisches Analysieren der Probleminformationen, die von jedem der Benutzer eingegeben werden, um einen von der Vielzahl von bezeichneten Informationsbereichen, auf den sich die Probleminformationen beziehen, zu identifizieren, und ein Hinzufügen eines von der Vielzahl von Tags zu den Probleminformationen, die von jedem der Benutzer eingegeben werden, auf der Basis des Tags, der dem identifizierten von der Vielzahl von bezeichneten Informationsbereichen, auf den sich die Probleminformationen beziehen, entspricht,
Kompilieren der Benutzereingaben;
Organisieren der Benutzereingaben zu bezeichneten Informationsbereichen von kompilierten Daten durch Sortieren der Benutzereingaben auf der Basis der Tags, die zu den Benutzereingaben, die von jedem der Benutzer eingegeben werden, hinzugefügt wurden; und
Anzeigen der kompilierten Daten, beinhaltend der Probleminformationen, die von jedem der Benutzer eingegeben werden, auf einer Anzeigevorrichtung, die in die bezeichneten Informationsbereiche in Abhängigkeit von dem Tag, der zu den Probleminformationen, die von jedem der Benutzer eingegeben werden, hinzugefügt wurde, unterteilt ist.

8. Nichtflüchtiges computerlesbares Speichermedium nach Anspruch 7, wobei die bezeichneten Informationsbereiche mindestens einen bezeichneten Informationsbereich beinhalten, der die Probleme beim Bereitstellen von Gesundheitspflege auflistet, die durch die Tags identifiziert wurden und anhand des Status der Probleminformationen organisiert sind.

9. Verfahren nach Anspruch 6, wobei die bezeichneten Informationsbereiche, in die die Anzeigevorrichtung unterteilt wird, mindestens einen bezeichneten Informationsbereich, um die Ziele der Gesundheitseinrichtung anzuzeigen, und einen anderen bezeichneten Informationsbereich, um Probleme beim Bereitstellen von Gesundheitspflege, die durch die Benutzereingaben identifiziert wurden, anzuzeigen, beinhalten, die durch mindestens eine bzw. einen von Zeit und Status organisiert sind.

10. Verfahren nach Anspruch 9, wobei die Ziele der Gesundheitseinrichtung mindestens eines von Behandeln von Patientenschmerzen, Verringern von Entscheidungszeiten beim Verabreichen von Gesundheitspflege, Verbessern von Vorgehensweisen, die für die Patientengesundheit entscheidend sind, und Bilden mindestens eines Teams der Gesundheitsdienstleister, um die Gesundheitspflege zu verbessern, beinhalten.

## Revendications

1. Système de communication dans un environnement de soins de santé pour la communication entre plusieurs utilisateurs distants de l'environnement de soins de santé, comprenant :
une mémoire ;
un réseau ;
un dispositif d'affichage configuré pour afficher des informations dans une pluralité de zones d'informations désignées ;
des dispositifs d'interface utilisateur connectés au réseau, comprenant chacun une interface d'entrée configurée pour obtenir des entrées utilisateur de la part d'individus, y compris des informations relatives aux problèmes concernant la prestation de services aux patients dans un établissement de soins de santé ; et
un processeur, connecté aux dispositifs d'interface utilisateur via le réseau et au dispositif d'affichage, configuré pour traiter les entrées utilisateur en temps réel et permettre aux utilisateurs de collaborer, par le fait que le processeur est configuré pour
maintenir, dans la mémoire, un référentiel comprenant une pluralité d'étiquettes, chacune de la pluralité d'étiquettes correspondant à l'une respective d'une pluralité de zones d'information désignées ;
recevoir des entrées utilisateur,
identifier les informations relatives aux problèmes en ajoutant des étiquettes aux entrées utilisateur, comprenant l'analyse sémantique des informations relatives aux problèmes entrées par chacun des utilisateurs afin d'identifier l'une de la pluralité de zones d'information désignées à laquelle les informations relatives aux problèmes se rapportent, et l'ajout d'une de la pluralité d'étiquettes aux informations relatives aux problèmes entrées par chacun des utilisateurs sur la base de l'étiquette qui correspond à l'une, identifiée, de la pluralité de zones d'information désignées à laquelle les informations relatives aux problèmes se rapportent,
compiler et organiser les entrées utilisateur, comprenant le tri des entrées utilisateurs par l'étiquette ajoutée aux informations relatives aux problèmes entrées par chacun des utilisateurs, et
délivrer en sortie les informations relatives aux problèmes entrées par chacun des utilisateurs sur le dispositif d'affichage dans des zones différentes parmi la pluralité de zones d'information désignées en fonction de l'étiquette ajoutée aux informations relatives aux problèmes entrées par chacun des utilisateurs.

2. Système de communication selon la revendication 1, dans lequel les zones d'information désignées du dispositif d'affichage comprennent au moins l'une de la pluralité de zones d'information désignées énumérant les informations relatives aux problèmes entrées par chacun des utilisateurs lors de la fourniture de soins de santé identifiées par l'étiquette qui correspond à l'une de la pluralité de zones d'information désignées à laquelle les informations relatives aux problèmes se rapportent.

3. Système de communication selon la revendication 2, dans lequel les zones d'information désignées de l'affichage groupé comprennent une zone problème nouvellement identifié, une zone problème en attente et une zone problème résolu, chacune affichant simultanément une liste d'informations correspondantes relatives aux problèmes.

4. Système de communication selon la revendication 1, dans lequel au moins certaines des entrées proviennent de dispositifs portables portés par le personnel soignant dans l'établissement de soins de santé.

5. Système de communication selon la revendication 4, dans lequel au moins l'une des zones d'information désignées du dispositif d'affichage comprend des informations agrégées obtenues à partir des entrées utilisateur provenant de plus d'une personne du personnel soignant.

6. Procédé de communication dans un environnement de soins de santé entre plusieurs utilisateurs distants via une communication en temps réel, comprenant :
le maintien d'un référentiel comprenant une pluralité d'étiquettes, chacune de la pluralité d'étiquettes correspondant à l'une respective d'une pluralité de zones d'information désignées ;
la réception, par un processeur, d'entrées utilisateur provenant de dispositifs portables portés par des prestataires de soins de santé, parmi les utilisateurs distants, fournissant une prestation de divers services aux patients dans un établissement de soins de santé ;
le traitement, par le processeur, à partir des entrées utilisateur, des informations relatives aux problèmes en ajoutant des étiquettes aux entrées utilisateur, comprenant l'analyse sémantique des informations relatives aux problèmes entrées par chacun des utilisateurs afin d'identifier l'une de la pluralité de zones d'information désignées à laquelle les informations relatives aux problèmes se rapportent, et l'ajout d'une de la pluralité d'étiquettes aux informations relatives aux problèmes entrées par chacun des utilisateurs sur la base de l'étiquette qui correspond à l'une, identifiée, de la pluralité de zones d'information désignées à laquelle les informations relatives aux problèmes se rapportent ;
la compilation des entrées utilisateur ;
l'organisation des entrées utilisateur en zones d'information désignées de données compilées en triant les entrées utilisateur sur la base des étiquettes ajoutées aux informations relatives aux problèmes entrées par chacun des utilisateurs ; et
l'affichage, par le processeur, des données compilées, comprenant les informations relatives aux problèmes entrées par chacun des utilisateurs, sur un dispositif d'affichage divisé en les zones d'information désignées en fonction de l'étiquette ajoutée aux informations relatives aux problèmes entrées par chacun des utilisateurs.

7. Support de stockage non transitoire lisible par ordinateur stockant des instructions qui, lorsqu'elles sont exécutées par un dispositif informatique, amènent le dispositif informatique à réaliser un procédé comprenant :
le maintien, dans une mémoire, d'un référentiel comprenant une pluralité d'étiquettes, chacune de la pluralité d'étiquettes correspondant à l'une respective d'une pluralité de zones d'information désignées ;
la réception d'entrées utilisateur provenant de dispositifs portables portés par des prestataires de soins de santé fournissant une prestation de divers services aux patients dans un établissement de soins de santé ;
l'identification, à partir des entrées utilisateur, des informations relatives aux problèmes concernant la fourniture de soins de santé en ajoutant des étiquettes aux entrées utilisateur, comprenant l'analyse sémantique des informations relatives aux problèmes entrées par chacun des utilisateurs afin d'identifier l'une de la pluralité de zones d'information désignées à laquelle les informations relatives aux problèmes se rapportent, et l'ajout d'une de la pluralité d'étiquettes aux informations relatives aux problèmes entrées par chacun des utilisateurs sur la base de l'étiquette qui correspond à l'une, identifiée, de la pluralité de zones d'information désignées à laquelle les informations relatives aux problèmes se rapportent ;
la compilation des entrées utilisateur ;
l'organisation des entrées utilisateur en zones d'information désignées de données compilées en triant les entrées utilisateur sur la base des étiquettes ajoutées aux informations relatives aux problèmes entrées par chacun des utilisateurs ; et
l'affichage des données compilées, comprenant les informations relatives aux problèmes entrées par chacun des utilisateurs, sur un dispositif d'affichage divisé en les zones d'information désignées en fonction de l'étiquette ajoutée aux informations relatives aux problèmes entrées par chacun des utilisateurs.

8. Support de stockage non transitoire lisible par ordinateur selon la revendication 7, dans lequel les zones d'information désignées comprennent au moins une zone d'information désignée énumérant les problèmes concernant la fourniture de soins de santé identifiée par les étiquettes et organisée selon l'état des informations relatives aux problèmes.

9. Procédé selon la revendication 6, dans lequel les zones d'information désignées selon lesquelles le dispositif d'affichage est divisé comprennent au moins une zone d'information désignée pour afficher les objectifs de l'établissement de soins de santé, et une autre zone d'information désignée pour afficher les problèmes concernant la fourniture de soins de santé identifiées par les entrées utilisateur et organisées selon au moins l'un parmi le temps et l'état.

10. Procédé selon la revendication 9, dans lequel les objectifs de l'établissement de soins de santé comprennent au moins l'un parmi la gestion de la douleur du patient, la réduction des délais de décision dans l'administration des soins de santé, l'amélioration des procédures essentielles à la santé du patient et la formation d'au moins une équipe de prestataires de soins de santé pour améliorer les soins de santé.
